# EUROPEAN PATENT SPECIFICATION

(11) **EP 2 680 938 B1**
(45) Date of publication and mention of the grant of the patent: **28.09.2022**
(21) Application number: 12711487.4
(22) Date of filing: 01.03.2012
(51) Int. Cl.: B01D 53/64, B03C 3/14, B03C 3/145, B03C 3/49, B01D 53/14

(54) **WET ELECTROSTATIC PRECIPITATOR AND RELATED METHODS**
ELEKTROSTATISCHER NASSFILTER UND ZUGEHÖRIGES VERFAHREN
ÉLECTROFILTRE HUMIDE ET PROCÉDÉS ASSOCIÉS

(30) Priority: 01.03.2011 US 201113037921
(43) Date of publication of application: 08.01.2014
(73) Proprietor: RSR Technologies, Inc., Dallas, TX 75247 (US)
(72) Inventor: ELLIS, Timothy, W., Dallas, TX 75204 (US); KRIGMONT, Henry, V., Seal Beach, CA 90740 (US)
(74) Representative: Potter Clarkson
(86) International application number: PCT/US2012/027209
(87) International publication number: WO 2012/118926

(56) References cited:
- US-A- 4 364 910
- US-A- 5 391 220
- US-A- 5 827 352
- US-A1- 2004 105 802
- US-A1- 2010 119 428

## Description

### FIELD OF THE INVENTION

The present invention relates generally to the reduction of toxic air emissions and, more specifically, to wet electrostatic precipitators used in industrial manufacturing facilities.

### BACKGROUND

In 1987, the California state legislature (USA) adopted the Air Toxics "Hot Spots" Information and Assessment Act (or AB 2588). AB 2588, and similar legislation in other states of the United States, requires industrial manufacturers that generate toxic air emissions to notify the public in the immediate area that there may be a risk of exposure to known carcinogenic substances. In addition, AB 2588 requires facilities to submit an air toxics inventory report ("ATIR"). A facility's priority score is calculated from information in the ATIR. A facility with a priority score greater than ten (10) must provide a health risk assessment ("HRA"), following guidelines established by the State of California Office of Environmental Health Hazard Assessment, and supplemented by Air Quality Management District guidelines. If the risk, reported in the HRA exceeds specific thresholds, then the facility is required to provide public notice to the affected community.

Secondary lead (Pb) recycling facilities and other industrial installations in California, USA, operate under California's Proposition 65 legislation along with AB 2588. California Proposition 65 requires community notification if a facility emits substances known or identified by the state to cause cancer. The public awareness or notification requirements of the program specify quarterly reporting, direct mail campaigns, and media announcements *(e.g.,* via newspaper) to those individuals living in the area who may be affected by the emissions. Legislation under AB 2588 also requires identified facilities to conduct HRAs which determine cancer risk and cancer burden as well as an index to acute and chronic health risks as identified in the HRA rules. The values for determining the HRA are specified in the modeling protocols and values included in the regulations.

In 1992, the California state legislature added a risk reduction component, the Facility Air Toxic Contaminant Risk Audit and Reduction Plan (or SB 1731), which required the District to specify a significant risk level, above which risk reduction would be required. In Rule 1402, the South Coast Air Quality Management District Governing Board set the significant risk level at a cancer risk of 100 in one-million, and a total chronic or acute hazard index of 5.0. The Board also established action risk levels at a cancer burden of 0.5, a cancer risk of 25 in one-million, and a hazard index of 3.0. To better explain what these numbers mean the following definitions from the regulations are provided:
- Maximum Individual Cancer Risk ("MICR"): the estimated probability of a potentially maximally exposed individual contracting cancer as a result of exposure to toxic air contaminants over a period of 70 years for residential receptor locations. The MICR for worker receptor locations must also be calculated.
- Cancer Burden: the estimated increase in the occurrence of cancer cases in a population subject to an MICR of greater than or equal to one in one-million (1 × 10⁻⁶) resulting from exposure to toxic air contaminants.
- Acute Hazard Index: the ratio of the estimated maximum one-hour concentration of a toxic air contaminant at a receptor location to its acute reference exposure level
- Chronic Hazard Index: the ratio of the long-term level of exposure to a toxic air contaminant for a potentially maximally exposed individual to the chronic reference exposure level for the toxic air contaminant.

Public notification and a public meeting are required for facilities with cancer risks greater than or equal to ten in one-million or non-cancer acute or chronic hazard index values greater than one. Rule 1402 requires annual public notice until the facility gets below the action risk levels.

Industrial facilities such as secondary lead smelter plants are subject to these rules and regulations in California, USA, and similar rules and regulations in other locations in the United States and around the world.

Secondary lead (Pb) smelters produce lead and lead alloys from lead-bearing scrap materials. Spent batteries are the main source of feed material to secondary lead smelters. The secondary smelting process is generally characterized by three operations: scrap pretreatment, smelting and refining. Scrap pretreatment operations include the separation of metal and non-metal components from lead-bearing scrap. Such operations include battery breaking, plastic separation and removal, and lead crushing. Smelting produces lead by the oxidation of lead sulphates, followed by carbothermic reduction of oxides to elemental lead (Pb).

Two lead bearing streams maybe produced by a smelting furnace. The first stream is a metallic lead stream that may be sent directly to a refinery for the production of lead alloys, such as non-antimonial alloys. The second steam is a matte stream that may be charged to an electric arc furnace, which may be used to recover lead content from the matte stream as high non-antimonial content alloy. A potential result of these processes is the production of various waste products that may be considered ambient air contaminants, if released. For example, particulate metals such as lead (Pb), arsenic, nickel, and cadmium may be emitted from the scrap pretreatment, smelting, and refining operations. Organics such as benzene, toluene, and xylene may also be emitted from these processes. In addition, nitrogen oxides, sulfur dioxide, and carbon monoxide emissions may result from combustion, smelting, and refining processes. Historically, emissions from secondary lead smelters have been controlled through the use of wet scrubbers for sulfur dioxide reduction, thermal oxidizers to reduce carbon monoxide, and baghouses to reduce emissions of particulate metals.

US 2010/119428 describes an exhaust-gas treatment apparatus capable of realizing a dissolved-salt spray method. An exhaust-gas treatment apparatus that removes SO₂ and SO₃ contained in combustion exhaust gas includes a desulfurization apparatus based on the lime-gypsum method. Desulfurizing effluent, containing dissolved salt, from the desulfurization apparatus is sprayed to an upstream side of the desulfurization apparatus to remove SO₃. A wet electrical dust precipitator may be provided downstream of the desulfurization apparatus. Effluent from the wet electrical dust precipitator may be made to merge with the desulfurizing effluent from the desulfurization apparatus.

US 4364910 describes flue gas processing to remove both gaseous contaminants such as sulfur dioxide and particulate matter. It integrates spray scrubbing apparatus and wet electrostatic precipitation apparatus and provides for the extraction and utilization of heat present in the flue gas which is being processed. The integrated system and process utilizes a spray scrubbing tower into which the flue gas is introduced and into which aqueous alkali slurry is introduced as spray for sulfur dioxide removal. The flue gas leaves the tower moisture laden and enters a wet electrostatic precipitator which includes a heat exchanger where flyash and entrained droplets in the flue gas are removed by electrostatic precipitation and heat is removed from the flue gas. The wet electrostatic precipitator includes a portion constructed as a cross flow heat exchanger with flue gas saturated with water vapor moving vertically upwards inside tubes arranged in a staggered pattern and ambient air being pulled horizontally across the outside of those tubes to cool the tube walls and thereby remove heat from the flue gas and cause condensation of water vapor on the inside wall surfaces. The condensate washes the electrostatically collected flyash particles down from the inside tube walls.

US 2004/105802 describes a process and apparatus for removing SO₂, NO, and NO₂ from a gas stream having the steps of oxidizing a portion of the NO in the flue gas stream to NO₂, scrubbing the SO₂, NO, and NO₂ with an ammonia scrubbing solution, and removing any ammonia aerosols generated by the scrubbing in a wet electrostatic precipitator.

US 5827352 describes a method for removing mercury from a gas stream. In the method, sorbent is injected into the gas stream. Water is dispersed into the gas stream to create a cooled gas stream. The cooled gas stream is allowed to dwell with the sorbent in a chamber to remove mercury from the cooled gas stream. The cooled gas stream is passed through an electrostatic precipitator located above the chamber which collects water and recycles the collected water back into the chamber for cooling the gas stream in the chamber. Other examples that combine multiple scrubbing steps and a wet electrostatic precipitator in a stack housing are known from US2010119428 and US5391220.

In view of the foregoing, there is a need in the art for a method to reduce emissions that minimizes employee and public exposures, and addresses local air toxin regulations and anticipated pollutant reductions in ambient air quality standards world-wide.

### SUMMARY

Exemplary embodiments of the present invention provide an emissions reduction system and method in which a stack housing comprises a conditioning section, a collector section comprising a wet electrostatic precipitator (WESP), and an output section. A chemically active aqueous stream is introduced into an incoming process stream in order to saturate the stream and produce a fog stream wherein water is condensed on the surface of particulates in the incoming stream. The process of condensation increases the efficiency of the particulate filtration process conducted by the WESP.

In an exemplary methodology of the present invention, acid and particulate laden gas enters the conditioning section for pretreatment to remove acid gas and reduce heavy particulate loading. Further gas saturation and pretreatment takes place while in contact with the chemically active liquor that continuously washes a packed media bed scrubber prior to remaining particulate laden gas flowing upwardly into a WESP. There, particles are charged by the system's high intensity ionizing corona and, as gas flows through the collection area, the highly charged particles are electrostatically driven to the grounded collecting tube electrodes. Entrained pollutant particles are then removed by intermittent irrigating/flushing water.

Embodiments of the present invention lower the emissions of toxins, such as lead, arsenic, cadmium, and nickel, by typically 90% or more.

### BRIEF DESCRIPTION OF THE DRAWINGS

Figure 1 illustrates a WESP stack housing according to an exemplary embodiment of the present invention;
Figure 2 illustrates the filtration process of the WESP according to an exemplary embodiment of the present invention; and
Figure 3 illustrates a filtration system utilizing the WESP of Figure 1 according to an exemplary embodiment of the present invention.

### DETAILED DESCRIPTION

Illustrative embodiments and related methodologies of the present invention arc described below as they might be employed in reducing toxic emissions produced in industrial manufacturing facilities, such as lead recycling facilities. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure. Further aspects and advantages of the various embodiments and related methodologies of the invention will become apparent from consideration of the following description and drawings.

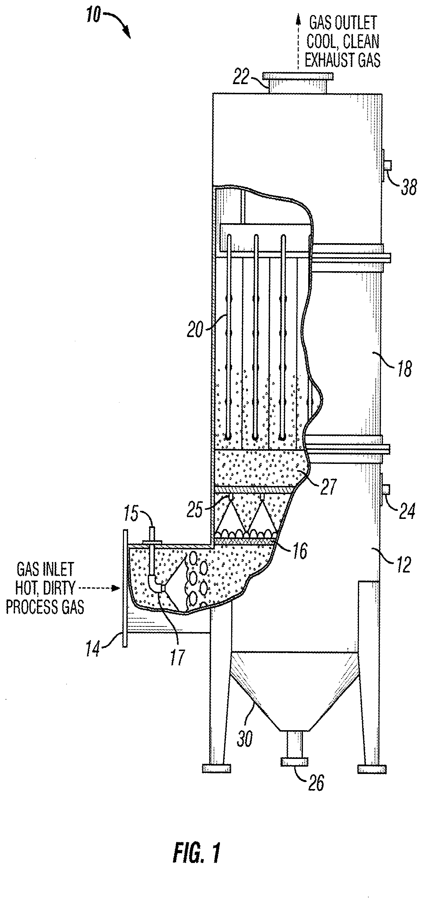

Figure 1 illustrates a wet electrostatic precipitator ("WESP") according to an exemplary embodiment of the present invention whereby WESP 10 acts as a "polishing" *(i.e.,* used as a secondary filtration system) control device to capture low concentrations of specific contaminants present in the gas stream as condensable particulates. However, those ordinarily skilled in the art having the benefit of this disclosure realize WESP 10 could also be used as a primary filtration system. WESP 10 incorporates an up-flow design wherein hot process gases, containing any number of toxic particulates (e.g., molecules, nano-sized particles, etc.), enter via the lower end and are routed upwards. Exemplary particulates can contain compounds or elemental forms of lead, arsenic, nickel, cadmium, selenium oxide, and sulfur dioxide.

At the lower end of WESP 10, a conditioning section 12, acting as an absorber/condenser/quencher sharing a common housing, receives inlet gases from various sources introduced via gas inlet manifold 14. Adjacent gas inlet manifold 14 is an inlet header 15 comprising one or more multiple throat venturi nozzles 17 which supply fluid in order to saturate the incoming gas stream. The fluid/liquor supplied to the venturi nozzles 17 is an aqueous solution having a low concentration of an alkali or alkali earth carbonates or hydroxide, such as, for example, sodium carbonate, which may be used to remove sulfur dioxide from the gas stream.

The saturated gas stream then flows up into a packed media bed 16, which, in an exemplary embodiment, comprises tower packing material such as random Jaeger Raschig Super Ring packing. Fog headers 24 (connected to a fluid supply, not shown) are located above the packed media bed 16 in order to provide a fine mist, or vapor, of water via a plurality of nozzles 25. The media bed 16 provides gas-liquid contact by the film of liquor/liquid that forms on the surface of the media. As the gas continues to move upwardly through the stack housing, it flows up through media bed 16 against a counter-current flow of chemically active liquor supplied via nozzles 25 (and the liquor received from further processing above as will be later described). The liquor circulating system of conditioning section 12 consists of a circulating pump (not shown), liquid reservoir 30 in the bottom of WESP 10, piping system (not shown), controls (not shown), and spray nozzles 25. Spray nozzles 25 are designed to provide full coverage across the entire cross-section of conditioning section 12 to provide intimate contact between the gas and liquor.

The liquor flows downward through the media bed 16 and collects in the bottom of WESP 10 from where it is transported to an external blow down tank via drain 26, where a pump circulates the liquor through a heat exchanger, and back to the top of the spray nozzles 25 above packed bed 16, via fog headers 24. A level control (not shown), positioned within reservoir 30 works in conjunction with a pump to ensure the correct level of liquid is maintained. Thus, the excess liquid is pumped out of the WESP 10 to the blow down tank.

Due to the cooling of the hot incoming gas stream and the introduction of the liquor, water begins to condense on the particulates in the gas stream, thus forming a fog in conditioning section 12. The fog is formed when droplets of H₂O form (e.g., approximately 1-25 µm) in conditioning section 12, typically when the temperature is less than 5°C lower than the dew point, as is understood by one ordinarily skilled in the art having the benefit of this disclosure. As the gas flows upwardly, it is cooled by direct contact with the recirculated liquor. Since the gas enters conditioning section 12 in an unsaturated state, the liquid saturates and cools the gas below adiabatic saturation. Water is condensed from the gas as it cools. As such, conditioning section 12 performs both sensible cooling of the gas *(i.e.,* heat transfer) as well as mass transfer *(i.e.,* condensation of water and absorption to particulate surfaces).

As the water condenses, a weak acid begins to form. In order to control the amount of acid present and impurity level in the system, make-u p reagent is added to the liquor used in the system. The more reagent that is added, the lower the acid concentration, and level of impurities in conditioning section 12.

The design of conditioning section 12 takes into account both the temperature difference between the weak acid and the gas, which is the driving force available for heat transfer, as well as the difference in partial pressure of water vapor that is the driving force for mass transfer. The packing in media bed 16 provides the contact surface area for mass and heat transfer. The gas retention time must be sufficient to allow the metallic vapors and inorganic compounds to be condensed into fine particles that will facilitate their removal in downstream equipment. The gas retention time based on the inlet gas flow may be about 3.0 seconds, for example.

An expansion area 27 is provided between fog header 24 and collector section 18, which is located above nozzles 25. The fog stream, in which water has condensed on the surface of the particulates, is produced here due to two reasons: the first is the drop in pressure and, second, a drop in temperature of the gas stream (as it cools as it rises through WESP 10). As the water in the gas stream evaporates, it lowers the temperature of the stream, thereby causing the particulates to be absorbed into the condensing water. Also, the particulates may act as nuclei which aids in the condensation of H₂O. In addition, the pressure decreases due to the cooling of the stream. Thereby, the combination of the water saturation, temperature, and pressure of the gas stream as it exits media bed 16 result in water condensation and, thus, the creation of the fog stream. Sensors (not shown) may be located within conditioning section 12 to assure the correct temperatures, humidities, and air pressures are maintained to facilitate creation of the fog stream, as is understood by one ordinarily skilled in the art having the benefit of this disclosure. Without the process of condensation of the particles in expansion area 27 *(i.e.,* production of a fog stream), the particulates of metallic and inorganic material would be too small to be captured in collector section 18, as will be described below. A control system may be utilized to monitor/control the condensation process as is understood by one ordinarily skilled in the art having the benefit of this disclosure.

As previously described, the quench process of conditioning section 12 results in the condensation of gas into the liquid. Process liquid from the conditioning section 12, introduced via nozzles 25, is collected in reservoir 30 and recycled. New liquid is constantly introduced, and reagent is added on demand using a dosing pump controlled by a pH monitor (not shown). As previously described, the liquor falling from conditioning section 12 is sent to a blow down (storage) tank before being sent to a facility recycle/reuse system and/or a facility effluent treatment system.

Accordingly, conditioning section 12 provides adiabatic saturation of the incoming gas, partial cleaning of the gas, residence for the condensation of metallic vapors and particles to facilitate their subsequent removal in collector section 18, absorption of residual sulfur dioxide in the gas stream, and condensation of liquid contained in the incoming gas stream. By the time the gas has reached collector section 18, it has been cooled to below its adiabatic saturation temperature, and is in the form of a fog.

Referring further to FIG. 1, to enhance particulate metals control, through the use of nozzles 25 and venturi nozzles 17, conditioning section 12 ensures the flow of inlet gas is water saturated and evenly distributed as it moves through expansion section 27 to collector section 18 above. As the gas stream cools in conditioning section 12, water begins to condense on the particulate metals in the gas stream, which may comprise sub-micron sized metallic particles, resulting in the creation of the fog, which in turn results in increased particle sizes and higher collection efficiencies in collector section 18. Additionally, gas volume is reduced, thus allowing collector section 18 to be smaller than would otherwise be needed and ensures the greatest possible capture of condensable compounds, for example, prior to entering collector section 18.

After passing through conditioning section 12 (where the gas has been transformed into a fog stream as previously described), the fog stream enters collector section 18. Collector section 18 comprises a wet electrostatic precipitator having an array of collecting tubes 20 with high voltage electrodes running through the center of each tube 20. Particulate collection in this area involves three steps. Initially, the particles in the fog stream are given a negative charge by an ionizing corona produced by the electrode. Next, the electrical field between the electrode and the tube wall causes the charged particles to migrate to and accumulate on the tube walls. Finally, accumulated particulates are periodically washed from the tube walls into reservoir 30 at the bottom of WESP 10 using nozzles (not shown) connected to wash headers 38.

As stated, collection section 18 comprises a wet electrostatic precipitator operating with super saturated air streams (100% relative humidity), *i.e.,* the fog stream. In this exemplary embodiment, the wet electrostatic precipitator may be a vertical up-flow hexagonal tube type precipitator having a series of collecting tubes 20. The vapor pressure of the aqueous fog stream is controlled by temperature and the chemical composition, as the addition of soluble species affect the partial pressure of water available from the solution, as would be understood by one ordinarily skilled in the art having the benefit of this disclosure. Lowering the vapor pressure of water in the fog stream flow aids in the removal of particles by increasing coalescence.

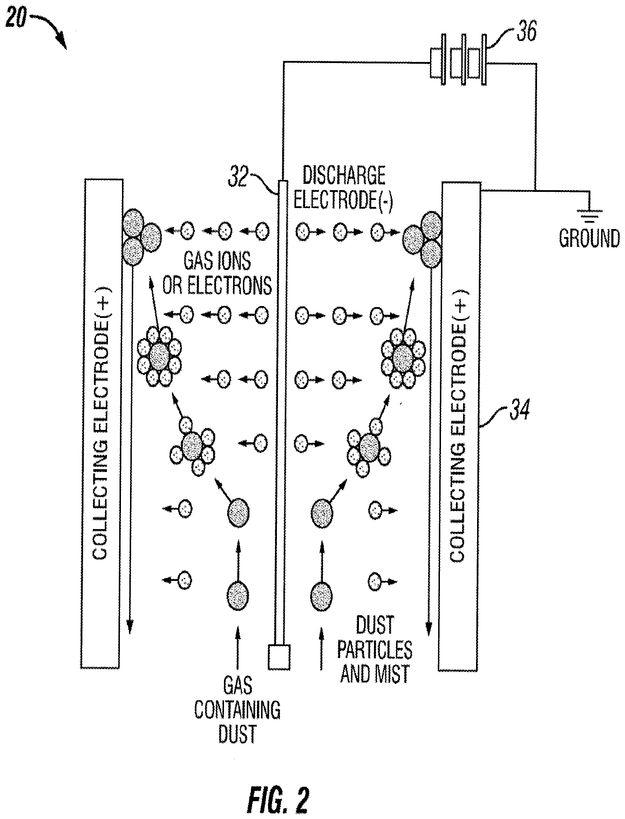

Referring to the exemplary embodiment of Figure 2, collector section 18 may be a hexagonal tubular precipitator consisting of an array of tubes 20 having discharge electrodes 32 and collecting electrodes 34. Collecting electrodes 34 may be in the shape of a six-sided hexagon with mast discharge electrodes 32 located in the center of each cylinder. Discharge electrodes 32 may be in the form of a rigid mast with discs with sharp corona generating discharge points. The discharge electrodes 32 may virtually eliminate maintenance, since there are no broken wires to replace, while a hex-tubular configuration lessens sparking and shorting of the cells. A hexagonal shape may be chosen in this exemplary embodiment because these geometries are much more space efficient than a round cylindrical shape, and produce a greater collection efficiency in a given volume. WESP 10 may use rigid mast high intensity ionizing discharge electrodes 32 designed for generation of a concentrated corona field. This design may ensure that a higher current and field strength results in higher particle migration velocities that equate into higher removal efficiency.

Collecting electrodes 34 are grounded and the discharge electrodes 32 are connected to high voltage power supply 36 to create a strong electric field inside each tube 20. High voltage insulators, which support the high-voltage discharge electrode system, may be kept clean by continuously using a purge-air system. Gases in the fog stream are ionized as they flow through the electrical field, thereby negatively charging both aerosol and dust particles. Solid particulate matter and mist droplets that enter the electrostatic section arc charged by the high voltage and current produced by the electrode and collected on the grounded tubes 20. Collected particulates are then flushed down into the reservoir 30 using liquid introduced via spray nozzles connected to wash headers 38 located at the top and directly below the mist eliminator section 22. The rinsing process may operate on a periodic, predetermined schedule.

When the collecting electrode 34 is grounded and a high negative voltage is applied to discharge electrode 32, a corona discharge is generated from discharge electrode 32. This corona discharge fills the precipitator space with ions and electrons, as illustrated in Figure 2. When gas laden with dust (and mist), *i.e.,* the fog stream, is introduced into this precipitator space, dust (and mist) in the fog stream is negatively charged. The charged dust (and mist) moves towards collecting electrode 34 by Coulomb force accompanying electrostatic aggregating action, and adheres to the dust-collecting electrode (known as "precipitation"). Thereafter, the adherent dust (mist) loses its negative charge on the collecting electrode 34. Due to its own weight and the washing water, the dust (and mist) rinsed off the collecting electrodes 34, falls into reservoir 30 and is subsequently pumped away. Moreover, the liquor produced during the rinse falls down through conditioning section 12 further aiding in the creation of the fog stream, thereby adding to the efficiency of the contaminant removal process.

As the treated exhaust exits collection section 18, it passes through mist eliminator 22 for water droplet removal prior to entering a discharge stack. Mist eliminator 22 provides a large surface area in a small volume to collect liquid without substantially impeding gas flow. Thus, as the fog stream passes through mist eliminator 22, liquid is removed.

Efficient overall performance of WESP 10 depends heavily upon having similar gas conditions at inlet manifold 14 of each WESP 10 and at the inlet of each tube 20. The present invention is designed with uniform gas velocity distribution through the electrical fields, to avoid high-velocity areas that would cause loss of already collected material or reentrainment. The uniform gas flow distribution is especially important while collecting fine, sub-micron particulate at high collection rates. The uniform gas flow distribution across each individual module is also a vital parameter from the mist eliminator performance point of view. Although some cross flow traversing may take part in conditioning section 12, there will be no cross flow after the fog stream enters tubes 20 of collector section 18. Consequently, if uneven gas flow exits the tubes 20, it will cause inefficiencies in mist eliminator 22 due to the excessive local gas velocities. In addition, uniform gas flow distribution will result in a lower pressure loss as compared with the highly turbulent uneven gas flow. On the other hand, excessive local velocities in mist eliminators 22 will result in added pressure losses.

In the present invention, to achieve a smooth and uniform gas distribution throughout WESP 10, the gases enter via specially designed multi-stage gas distribution devices ensuring first, balanced and uniform gas flow distribution between the various WESP units, and, second, to achieve a uniform gas flow distribution across the entire unit cross-section within each individual module. The gas flow distribution system incorporates the first stage represented by a perforated plate (not shown) located at each WESP gas inlet manifold 14 followed by the internal gas directional devices (not shown) represented by the set of the flat baffle plates arranged in so called a "chicken ladder" fashion. The latter will ensure that the gas flow is uniform and evenly directed upwards through the conditioning section towards the collection section.

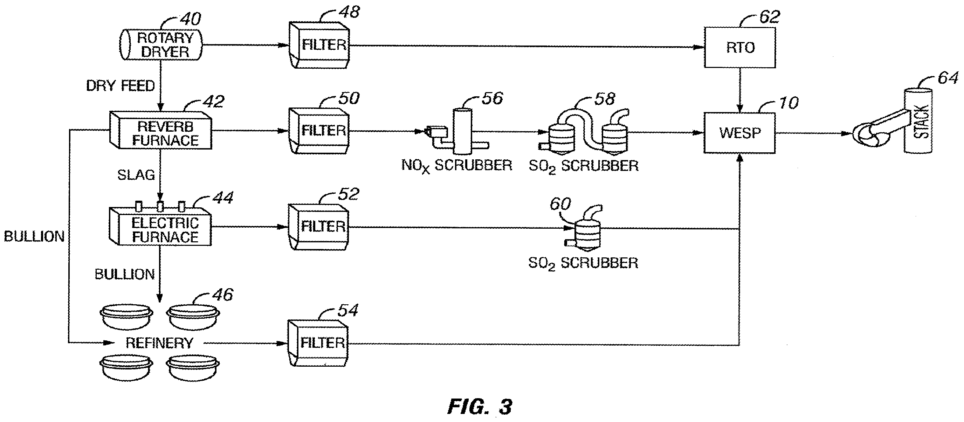

Referring to the exemplary embodiment of Figure 3, an exemplary facility utilizing the present inventive system and method would comprise WESP 10 used to treat the combined stack gases of the four major facility processing units. These are the kiln/rotary dryer 40, reverberatory furnace 42, electric arc furnace 44, and refinery 46. Note that in this embodiment, reverberatory furnace 42 acts as a primary reduction system while electric arc furnace 44 acts as a secondary reduction system. Those ordinarily skilled in the art having the benefit of this disclosure realize there arc a variety of systems, such as a blast or rotary furnace, which could be used either as a primary or secondary reduction system.

Further referring to this embodiment, WESP 10 may comprise any number of separate WESP units *(e.g.,* 2, 3, 4, or 5 WESP units), thereby allowing one to be cleaned while the others are still operational. All four process streams may be initially treated via filters 48, 50, 52, and 54. The process stream of reverberatory furnace 42 may also go through NOₓ scrubber 56 and SO₂ scrubber 58. The process stream of electric furnace 44 may also go through SO₂ scrubber 60. The process stream of kiln 40 may be further processed in regenerative thermal oxidizer ("RTO") 62 before entering inlet 14 of WESP 10 (along with the other 3 process streams).

All four process gas streams enter inlet manifold 14 and may be further processed prior to being released through one common stack 64. As stated, prior to entering inlet manifold 14, the process stream from kiln 40 may be routed through RTO 62, which may be used to reduce volatile organics. Gas treated by the RTO may be cooled using a quencher prior to introduction into inlet manifold 14. An 5-unit exemplary facility may be designed to operate efficiently with four units operating so that a fifth unit can be taken offline as necessary for periodic inspection and maintenance, while the other units remain operational. However, please note the WESP of the present invention can be utilized as a stand-alone unit, in combination with other processing/filtration units, or as a primary filtration unit, as is understood by one of ordinary skill in the art having the benefit of this disclosure.

Because reducing the calculated HRA cancer risk and cancer burden associated with emissions at facilities is a goal of the present invention, design of WESP 10 may be based upon emissions of those contaminants which were regarded as primary contributors to potential risk. The cancer risk and cancer burden estimates may be based on facility emissions and a modeling and risk assessment program known as the Hotspots Analysis and Reporting Program. Emission rates may be established through a stack testing program.

By way of example, test protocols and test results may be reviewable and approvable by the South Coast Air Quality Management District (Diamond Bar, California, USA). Such a project was implemented to test a system in accordance with the present invention. A pre-project estimate of cancer risk was 22.1 cancer cases in one-million exposed individuals over a 70-year evaluation period. Pre-project cancer burden was determined to have an index of 1.15. This index is less indicative of population exposure to cancer risk where a higher number indicates a greater potential risk.

During testing of the present invention, approximately 85 compounds were evaluated as potential cancer, chronic health risk, or acute health risk contributors. Of these 85 compounds, ten contributed greater than 99% of the potential cancer risk and were selected as high priority for reduction. These ten compounds appear in Table 1 below. The design of the present invention was considered to be an excellent control candidate to target compounds such as arsenic, lead, cadmium, and nickel. Arsenic was expected to be greatly reduced in conditioning section 12 while the other particulate metal compounds were expected to be removed in the collection section 18. The kiln was determined through testing to be the primary contributor of 1,3-butadiene emissions. After construction of WESP 10, a series of tests were performed between November 2008 and June 2009 to determine the effectiveness of the process. The chart below reflects the emissions levels prior to and after use of WESP 10 of the present invention with or without the use of an RTO.

**Table 1 - Pre and Post Inventive Emission Levels**

| **Emission (Lbs/Year)** | | | |
|---|---|---|---|
| **Element/Compound** | **Prior Process** | **Present Invention** | **% Emission Reduction** |
| Arsenic (As) | 96.0 | 4.6 | 95 |
| 1,3, Butadiene | 2024.9 | 33.3 | 98 |
| Cadmium (Cd) | 6.6 | 0.1 | 98 |
| Chromium (Cr) | 0.3 | 0.1 | 76 |
| Dioxins | 4.0E-04 | 8.3E-07 | 100 |
| Benzene | 1653.1 | 89.8 | 95 |
| Lead (Pb) | 615.0 | 0.8 | 100 |
| Formaldehyde | 5815.9 | 915.4 | 84 |
| Acetaldehyde | 3996.9 | 0.0 | 100 |
| Nickel (Ni) | 7.1 | 0.5 | 943 |

As a result of the substantial reduction in emissions from the targeted contributors to potential risk (through use of the present invention), post-project estimated cancer risk dropped by approximately 80.1 % to an estimated 4.4 cancer cases in one-million exposed individuals over a 70-year evaluation period. Estimated cancer burden was reduced by approximately 98% to 0.023. Since the dose-response relationship for each targeted substance may not be linear at low levels, the reductions in HRA cancer risk from emissions of each of the targeted substances may even be greater than these estimates would suggest. Additionally, the application of the present invention allows facilities to obtain emissions levels below those requiring notification under the Prop 65 safe harbor levels in California, USA.

The present inventive emission control technology takes an incoming gas stream, at an elevated temperature with low relative humidity, adds moisture and lowers the temperature, to allow for condensation of particles that can be collected electrostatically. Two integrated control mechanisms may be utilized: one for controlling temperature and humidification condensation of the gas stream; and a second for controlling air inputs and outputs via manipulation of fan speed. As previously described, humidification puts condensable water into the gas stream and cools the gas flow by evapotransperation. Soluble species in the gas flow, *e.g.* sulfur dioxide, selenium dioxide, etc., are adsorbed in the aqueous droplets upon their formation. This produces an ionic electrolyte solution, *i.e.,* chemical ionic species dissolved in the droplet, which can actively absorb more water from the fog stream, thus further reducing the humidity of the flow. Thus, the formation of particles and their physiochemical/electrostatic properties are modified in-situ. To accomplish this effectively, an automatic control scheme may be advantageous to take full advantage of the process capabilities.

The present inventive system and method may be applied to single or multiple WESP units operating in series or parallel configuration. Process water, in reservoir 30, exits WESP 10 to a heat exchanger to remove heat from the process water, thereby stabilizing its temperature. Prior to re-entering WESP 10, chemicals are added to the process water to control the pH, *e.g.* Na₂CO₃, NaOH, and to provide active chemical moieties to aid in precipitation of chemical species for removal in WESP 10. Process water then re-enters WESP 10 where it is sprayed onto the packed media bed 16.

An exemplary system utilizing the present invention will now be described. Please note, however, one ordinarily skilled in the art having the benefit of this disclosure will realize any variety of system may be designed based upon operational requirements. Several control systems may be integrated into WESP 10 for process control. A differential pressure transmitter adjacent eliminator 22 may be used to measure the pressure drop between the inlet 14 and outlet duct to WESP 10 to assure proper gas velocity and temperature. In doing so, valves may be used to control the air to actuate the inlet/outlet dampers for flow control. The valves/dampers used to control the air may also actuate makeup water valves which are supplied to entrap particulates. Valves may control the air to actuate the valves that provide cleaning water to the wet electrostatic precipitators in collector section 18 and mist eliminator 22.

Thermocouples may be used to measure the temperature of the outlet gas leaving WESP 10 and to provide feedback for the flow of a cooling tower fan. Manual or automatic valves may be used to control the air to actuate the outlet dampers. A level control and level switches may be used to monitor the liquid level in reservoir 30 and to provide feedback for the control of the make-up water valves and the WESP blow down valves (not shown). Chemical metering valves may be used to control the flow of sodium bicarbonate (soda ash) into a WESP recirculation loop. Flow meters may be used to measure the cleaning water flow rate to the nozzles 24 and 38. Flow meters may be used to measure the air flow rate through WESP 10.

Process water may be pumped out of reservoir 30 where it may be separated into three streams. The first stream bypasses heat exchangers; the second stream is piped to a blow down tank with its flow rate controlled by the water level in the basin; and the third stream may enter heat exchangers where it is cooled by water supplied from a cooling tower. Process water exits the heat exchangers, merges with the heat exchanger bypass stream and returns to the WESP unit(s). The cooling tower pump transfers water from the cooling tower basin to each of the heat exchangers via a common header, as well as pumping a portion of the basin to the drain as blow down.

The cooling tower fan modulates to change the temperature of the cooling tower water, and thus balance the heat throughout the WESP system. Centrifugal pumps may control the flow of process water to the heat exchangers. A pH sensor may be used to detect the relative acidity of the process water and to provide feedback to chemical metering valves. Pneumatically operated ball valves with positioners may modulate the flow of blow down from the WESP units. A flow meter is used to provide feedback as to the combined WESP blow down flow rate.

A fan driven by a variable frequency drive ("VFD") with communication modules may permit Ethernet communications between the VFD and a control system to control the flow of air into the cooling tower. The WESP blow down tank may store blow down water from WESP 10 for reuse. Part of the water from a blow down tank may be used to fill an existing soda ash mix tank. Water may be pumped to the soda ash mix tank at the discretion of the operator. The rest of the water from WESP blow down tank may be used to dilute the soda ash in the soda ash day tank.

The soda ash day tank provides dilute sodium bicarbonate (soda ash) to WESP 10 via a recirculation loop. The soda ash day tank may be filled with water from the WESP blow down tank and the existing soda ash mix tank. Refills may be automatic and based on level control. A mixer may be provided to produce a homogenous mixture of diluted soda ash. Diluted soda ash may be pumped via a recirculation loop to all WESP units. Flow meters may monitor the flow rate of water from the WESP blow down tank to the soda ash mix tank. Valves may control the air to actuate the water fill valve for the WESP soda ash day tank. A mixer may be applied to mixing the contents of the WESP soda ash day tank. Level transmitters may monitor the level in the WESP soda ash day tank and to provide feedback for the refill function. Centrifugal pumps may be used to pump chemical to the WESP units via a recirculation loop with flow meters to monitor the flow rate of chemical through the recirculation loop.

An exemplary embodiment of the present invention provides an apparatus to reduce emissions, the apparatus comprising a stack housing having a lower and upper end; an inlet at the lower end to receive a process stream; a first mechanism to introduce a first aqueous stream into the process stream, the first mechanism being located adjacent the inlet; a media bed located above the inlet; a second mechanism to introduce a second aqueous stream into the process stream, the second mechanism being located above the media bed; an expansion area located above the second mechanism; a wet electrostatic precipitator located above the expansion area; and an outlet at the upper end to release the process stream. In another embodiment, the first mechanism to introduce the first aqueous stream is a multiple throat venturi system. In yet another embodiment, the media bed comprises packing material. In yet another, the apparatus comprises a reservoir located at the lower end of the stack housing.

In another embodiment, the reservoir is connected to a recycling system which recycles fluid from the first and second aqueous steams for further use. In yet another, the second aqueous stream is a fine mist. In yet another exemplary embodiment, the process stream rising from the expansion area comprises particulates having water condensed thereto. In another, the particulates are at least one of lead, selenium oxide, arsenic, nickel, cadmium, benzene, toluene, xylene, nitrogen oxide, sulfur dioxide, or carbon monoxide. In yet another, the process stream is emitted from a lead smelting facility. In yet another process stream, the process stream is received from at least one of a baghouse, kiln, primary reduction furnace, or a secondary reduction furnace.

An exemplary methodology of the present invention provides a method to reduce emissions, the method comprising the steps of (a) receiving a process stream into a lower end of a stack housing, the process stream comprising a gas; (b) introducing a first aqueous stream into the process stream, thereby producing a saturated process stream; (c) passing the saturated process stream up through a media bed; (d) introducing a second aqueous stream into the saturated process stream; (e) passing the saturated process stream up into an expansion area; (f) condensing water on a surface of a particulate in the saturated process stream, thereby creating a fog stream; (g) passing the fog stream up into a wet electrostatic precipitator; (h) removing the particulates from the fog stream, thereby creating a filtered stream; and (i) releasing the filtered stream out of an upper end of the stack housing. In another methodology, step (a) further comprises the step of receiving the process stream from a lead smelting facility. In yet another, step (a) further comprises the step of receiving the process stream from at least one of a baghouse, kiln, a primary reduction system, or a secondary reduction system.

Another exemplary embodiment of the present invention provides an apparatus to reduce emissions, the apparatus comprising an inlet to receive a process stream; a first mechanism to introduce a first aqueous stream into the process stream; a media bed; a second mechanism to introduce a second aqueous stream into the process stream; an expansion area located above the second mechanism; a wet electrostatic precipitator; and an outlet to release the process stream. In another embodiment, the first mechanism to introduce the first aqueous stream is a multiple throat venturi system. In yet another embodiment, the media bed is comprised of packing material. In yet another, the apparatus further comprises a reservoir located at the lower end of the apparatus.

In another embodiment, the reservoir is connected to a recycling system which recycles fluid from the first and second aqueous steams for further use. In yet another embodiment, the second aqueous stream is a fine mist. In another embodiment, the process stream rising from the expansion area comprises particulates having water condensed thereto. In yet another embodiment, the particulates are at least one of lead, selenium oxide, arsenic, nickel, cadmium, benzene, toluene, xylene, nitrogen oxide, sulfur dioxide, or carbon monoxide. In another embodiment, the process stream is omitted from a lead smelting facility. In yet another embodiment, the process stream is received from at least one of a baghouse, kiln, primary reduction system, or a secondary reduction system.

Another exemplary methodology of the present invention provides a method to reduce emissions, the method comprising the steps of (a) receiving a process stream into a housing, the process stream having particulates therein; (b) condensing water onto a surface of the particulates, thereby creating a fog stream; and (c) passing the fog stream through a wet electrostatic precipitator, thereby filtering the particulates from the fog stream. In another method, step (b) comprises the steps of introducing a first aqueous stream into the process stream, thereby producing a saturated stream; passing the saturated stream up through a media bed; introducing a second aqueous stream into the saturated stream; and passing the saturated stream up into an expansion area. In another methodology, step (a) further comprises the step of receiving the process stream from a lead smelting facility. In yet another, step (a) further comprises the step of receiving the process stream from at least one of a baghouse, kiln, reverberatory furnace, rotary furnace, blast furnace, electric furnace, refinery, or regenerative thermal oxidizer. In yet another exemplary methodology, step (c) further comprises the steps of filtering at least one of lead, selenium oxide, arsenic, nickel, cadmium, benzene, toluene, xylene, nitrogen oxide, sulfur dioxide, or carbon monoxide from the fog stream.

## Claims

1. A method to reduce emissions, the method comprising the steps of:
(a) receiving a process stream into a lower end of a stack housing via a gas inlet manifold (14), the stack housing comprising a conditioning section (12), a collector section (18) and an output section, the process stream comprising a gas and particulates;
(b) introducing a first aqueous stream into the process stream via an inlet header (15) adjacent the gas inlet manifold (14), the inlet header (15) comprising one or more multiple throat venturi nozzles (17), thereby producing a saturated process stream;
(c) passing the saturated process stream up through a media bed (16), wherein the media bed (16) is above the lower end of the stack housing;
(d) introducing a second aqueous stream into the saturated process stream via fog headers (24) located above the media bed (16) to provide a counter-current flow of the second aqueous stream down through the media bed (16), the fog headers (24) comprising a plurality of nozzles (25), the second aqueous stream forming a liquor flowing down through the media bed (16), collecting the liquor in a liquor reservoir (30), circulating the liquor through a heat exchanger and back to the spray nozzles (25);
(e) passing the saturated process stream up out of the media bed (16) into an expansion area (27);
(f) condensing water on a surface of the particulates in the saturated process stream in the expansion area (27), thereby creating a fog stream, wherein a fog stream comprises a super saturated air stream having 100% relative humidity;
(g) passing the fog stream up into the collector section comprising a wet electrostatic precipitator (18);
(h) controlling the airflow, temperature and humidity through the conditioning section (12) to ensure that the fog stream is saturated as it passes into the wet electrostatic precipitator (18);
(i) removing the particulates from the fog stream in the collector section (18), thereby creating a filtered stream; and
(j) releasing the filtered stream out of an upper end of the stack housing though the output section.

2. A method as defined in claim 1, wherein step (a) further comprises a step of receiving the process stream from a lead smelting facility.

3. A method as defined in claim 1, wherein step (a) further comprises a step of receiving the process steam from at least one of a baghouse, kiln, primary reduction furnace, or a secondary reduction furnace.

4. A method as defined in claim 1, wherein the particulates comprise at least one of lead, selenium oxide, arsenic, nickel, cadmium, benzene, toluene, xylene, nitrogen oxide, sulfur dioxide, or carbon dioxide.

5. An apparatus to reduce emissions, the apparatus comprising:
a stack housing (10) having a lower end and an upper end, the stack housing comprising a conditioning section (12), a collector section (18) and an output section;
a gas inlet manifold (14) at the lower end to receive a process stream comprising a gas and particulates;
a first mechanism (15) to introduce a first aqueous stream into the process stream, the first mechanism (15) comprising an inlet header (15) comprising one or more multiple throat venturi nozzles (17) and being located adjacent to the gas inlet manifold (14);
a media bed (16) located above the gas inlet manifold (14);
a second mechanism comprising fog headers (24) to introduce a second aqueous stream into the process stream, the second mechanism (24) being located above the media bed (16) and the second aqueous stream providing a counter-current flow through the media bed (16), the fog headers (24) comprising a plurality of nozzles (25), the second aqueous stream forming a liquor flowing down through the media bed (16);
a liquor circulating system comprising a liquor reservoir (30) located at the lower end of the stack housing (10) for collecting the liquor and a pump for circulating the liquor through a heat exchanger and back to the spray nozzles (25);
an expansion area (27) located above the second mechanism (24);
a wet electrostatic precipitator (18) located above the expansion area (27);
control mechanisms positioned in the conditioning section (12) to control temperature and humidity of the process stream and to control air inputs and outputs to ensure that the process stream passes to the wet electrostatic precipitator (18) as a saturated fog stream, wherein a fog stream comprises a super saturated air stream having 100% relative humidity; and
an outlet at the upper end to release the process stream.

6. An apparatus as defined in claim 5, wherein the media bed (16) comprises packing material.

7. An apparatus as defined in claim 5 further comprising a recycling system which recycles fluid from the first and second aqueous streams for further use.

8. An apparatus as defined in claim 5, further comprising at least one spray nozzle and a wash header (38), wherein the at least one spray nozzle is connected to the wash header (38) and the wash header (38) is located above the wet electrostatic precipitator (18) and below the outlet.

9. An apparatus as defined in claim 5, wherein the wet electrostatic precipitator (18) comprises a plurality of collecting tubes (20), each collecting tube comprising an ionizing discharge electrode (32) located in a center region of an electrically grounded cylindrical collecting electrode (34).

## Patentansprüche

1. Verfahren, um Emissionen zu reduzieren, das Verfahren umfassend die Schritte:
(a) Aufnehmen eines Prozessstroms in ein unteres Ende eines Stapelgehäuses über einen Gaseinlassverteiler (14), wobei das Stapelgehäuse einen Konditionierungsabschnitt (12), einen Sammelabschnitt (18) und einen Abgabeabschnitt umfasst, der Prozessstrom umfassend ein Gas und Partikel;
(b) Einleiten eines ersten wässrigen Stroms in den Prozessstrom über einen Einlasskopf (15) angrenzend an den Gaseinlassverteiler (14), der Einlasskopf (15) umfassend eine oder mehrere Venturi-Düsen (17) mit mehreren Verengungen, wobei dadurch ein gesättigter Prozessstrom erzeugt wird;
(c) Leiten des gesättigten Prozessstroms nach oben durch ein Medienbett (16), wobei sich das Medienbett (16) über dem unteren Ende des Stapelgehäuses befindet;
(d) Einleiten eines zweiten wässrigen Stroms in den gesättigten Prozessstrom über Nebelköpfe (24), die sich über dem Medienbett (16) befinden, um einen Gegenstromfluss des zweiten wässrigen Stroms nach unten durch das Medienbett (16) bereitzustellen, die Nebelköpfe (24) umfassend eine Vielzahl von Düsen (25), wobei der zweite wässrige Strom eine Flüssigkeit ausbildet, die nach unten durch das Medienbett (16) fließt, die Flüssigkeit in einem Flüssigkeitsreservoir (30) sammelt, die Flüssigkeit durch einen Wärmetauscher und zurück zu den Sprühdüsen (25) zirkuliert;
(e) Leiten des gesättigten Prozessstroms nach oben aus dem Medienbett (16) in einen Expansionsbereich (27);
(f) Kondensieren von Wasser auf einer Oberfläche der Partikel in dem gesättigten Prozessstrom in dem Expansionsbereich (27), wobei dadurch ein Nebelstrom erzeugt wird, wobei ein Nebelstrom einen übersättigten Luftstrom umfasst, der 100 % relative Feuchtigkeit aufweist;
(g) Leiten des Nebelstroms nach oben in den Sammelabschnitt, umfassend einen elektrostatischen Nassabscheider (18);
(h) Steuern des Luftflusses, der Temperatur und der Feuchtigkeit durch den Konditionierungsabschnitt (12), um sicherzustellen, dass der Nebelstrom gesättigt ist, wenn er in den elektrostatischen Nassabscheider (18) geleitet wird;
(i) Entfernen der Partikel aus dem Nebelstrom in dem Sammelabschnitt (18), wobei dadurch ein gefilterter Strom erzeugt wird; und
(j) Freisetzen des gefilterten Stroms aus einem oberen Ende des Stapelgehäuses durch den Abgabeabschnitt.

2. Verfahren nach Anspruch 1, wobei Schritt (a) ferner einen Schritt des Aufnehmens des Prozessstroms von einer Bleischmelzanlage umfasst.

3. Verfahren nach Anspruch 1, wobei Schritt (a) ferner einen Schritt des Aufnehmens des Prozessdampfes von mindestens einem von einem Gewebefilter, einem Brennofen, einem primären Reduktionsofen oder einem sekundären Reduktionsofen umfasst.

4. Verfahren nach Anspruch 1, wobei die Partikel mindestens eines von Blei, Selenoxid, Arsen, Nickel, Cadmium, Benzol, Toluol, Xylol, Stickstoffoxid, Schwefeldioxid oder Kohlendioxid umfassen.

5. Einrichtung, um Emissionen zu reduzieren, die Einrichtung umfassend:
ein Stapelgehäuse (10), das ein unteres Ende und ein oberes Ende aufweist, das Stapelgehäuse umfassend einen Konditionierabschnitt (12), einen Sammelabschnitt (18) und einen Abgabeabschnitt;
einen Gaseinlassverteiler (14) an dem unteren Ende, um einen Prozessstrom aufzunehmen, umfassend ein Gas und Partikel;
einen ersten Mechanismus (15), um einen ersten wässrigen Strom in den Prozessstrom einzuleiten, der erste Mechanismus (15) umfassend einen Einlasskopf (15), umfassend eine oder mehrere Venturi-Düsen (17) mit mehreren Verengungen und sich angrenzend an den Gaseinlassverteiler (14) befindet;
ein Medienbett (16), das sich über dem Gaseinlassverteiler (14) befindet;
einen zweiten Mechanismus, umfassend Nebelköpfe (24), um einen zweiten wässrigen Strom in den Prozessstrom einzuleiten, wobei sich der zweite Mechanismus (24) über dem Medienbett (16) befindet und der zweite wässrige Strom einen Gegenstromfluss durch das Medienbett (16) bereitstellt, die Nebelköpfe (24) umfassend eine Vielzahl von Düsen (25), wobei der zweite wässrige Strom eine Flüssigkeit ausbildet, die nach unten durch das Medienbett (16) fließt;
ein Flüssigkeitszirkulationssystem umfassend ein Flüssigkeitsreservoir (30), das sich an dem unteren Ende des Stapelgehäuses (10) zum Sammeln der Flüssigkeit befindet und eine Pumpe zum Zirkulieren der Flüssigkeit durch einen Wärmetauscher und zurück zu den Sprühdüsen (25);
einen Expansionsbereich (27), der sich über dem zweiten Mechanismus (24) befindet;
einen elektrostatischen Nassabscheider (18), der sich über dem Expansionsbereich (27) befindet;
Steuermechanismen, die in dem Konditionierabschnitt (12) positioniert sind, um Temperatur und Feuchtigkeit des Prozessstroms zu steuern und Luftein- und - abgaben zu steuern, um sicherzustellen, dass der Prozessstrom als ein gesättigter Nebelstrom zu dem elektrostatischen Nassabscheider (18) geleitet wird, wobei ein Nebelstrom einen übersättigten Luftstrom umfasst, der 100 % relative Feuchtigkeit aufweist; und
einen Auslass an dem oberen Ende, um den Prozessstrom freizusetzen.

6. Einrichtung nach Anspruch 5, wobei das Medienbett (16) Verpackungsmaterial umfasst.

7. Einrichtung nach Anspruch 5, ferner umfassend ein Recyclingsystem, das Fluid aus den ersten und zweiten wässrigen Strömen für eine weitere Verwendung recycelt.

8. Einrichtung nach Anspruch 5, ferner umfassend mindestens eine Sprühdüse und einen Waschkopf (38), wobei die mindestens eine Sprühdüse mit dem Waschkopf (38) verbunden ist und sich der Waschkopf (38) oberhalb des elektrostatischen Nassabscheiders (18) und unterhalb des Auslasses befindet.

9. Einrichtung nach Anspruch 5, wobei der elektrostatische Nassabscheider (18) eine Vielzahl von Sammelrohren (20) umfasst, jedes Sammelrohr umfassend eine ionisierende Entladungselektrode (32), die sich in einer mittleren Region einer elektrisch geerdeten zylindrischen Sammelelektrode (34) befindet.

## Revendications

1. Procédé destiné à réduire les émissions, le procédé comprenant les étapes suivantes :
(a) la réception d'un courant de traitement dans une extrémité inférieure d'un logement d'empilage par l'intermédiaire de la rampe d'entrée d'alimentation en gaz (14), le logement d'empilage comprenant une section de conditionnement (12), une section collectrice (18) et une section de sortie, le courant de traitement comprenant un gaz et des particules ;
(b) l'introduction d'un premier courant aqueux dans le courant de traitement par l'intermédiaire d'un collecteur d'entrée (15) adjacent à la rampe d'entrée d'alimentation en gaz (14), le collecteur d'entrée (15) comprenant une ou plusieurs buses venturi à col multiple (17), produisant ainsi un courant de traitement saturé ;
(c) le fait de faire monter le courant de traitement saturé à travers un lit de milieu (16), le lit de milieu (16) étant au-dessus de l'extrémité inférieure du logement d'empilage ;
(d) l'introduction d'un second courant aqueux dans le courant de traitement saturé par l'intermédiaire des collecteurs de brouillard (24) situés au-dessus du lit de milieu (16) pour fournir un écoulement à contre-courant du second courant aqueux vers le bas à travers le lit de milieu (16), les collecteurs de brouillard (24) comprenant une pluralité de buses (25), le second courant aqueux formant une liqueur s'écoulant à travers le lit de milieu (16), collectant la liqueur dans un réservoir de liqueur (30), faisant circuler la liqueur à travers un échangeur de chaleur et retournant aux buses de pulvérisation (25) ;
(e) le fait de faire monter le courant de traitement saturé hors du lit de milieu (16) dans une zone d'expansion (27) ;
(f) la condensation de l'eau sur une surface des particules dans le courant de traitement saturé dans la zone d'expansion (27), créant ainsi un courant de brouillard, un courant de brouillard comprenant un courant d'air sursaturé ayant une humidité relative de 100 % ;
(g) le fait de faire remonter le courant de brouillard dans la section collectrice comprenant un précipitateur électrostatique humide (18) ;
(h) la commande de l'écoulement d'air, la température et l'humidité à travers la section de conditionnement (12) pour s'assurer que le courant de brouillard est saturé lorsqu'il passe dans le précipitateur électrostatique humide (18) ;
(i) le fait d'enlever les particules du courant de brouillard dans la section collectrice (18), créant ainsi un courant filtré ; et
(j) la libération du courant filtré hors d'une extrémité supérieure du logement d'empilage à travers la section de sortie.

2. Procédé selon la revendication 1, dans lequel l'étape (a) comprend en outre une étape de réception du courant de traitement provenant d'une installation de fusion de plomb.

3. Procédé selon la revendication 1, dans lequel l'étape (a) comprend en outre une étape de réception de la vapeur de traitement à partir d'un dépoussiéreur à manches et/ou d'un four et/ou d'un four de réduction primaire et/ou d'un four de réduction secondaire.

4. Procédé selon la revendication 1, dans lequel les particules comprennent du plomb et/ou de l'oxyde de sélénium et/ou de l'arsenic et/ou du nickel et/ou du cadmium et/ou du benzène et/ou du toluène et/ou du xylène et/ou de l'oxyde d'azote et/ou du dioxyde de soufre et/ou du dioxyde de carbone.

5. Appareil pour réduire les émissions, l'appareil comprenant :
un logement d'empilage (10) ayant une extrémité inférieure et une extrémité supérieure, le logement d'empilage comprenant une section de conditionnement (12), une section collectrice (18) et une section de sortie ;
une rampe d'entrée d'alimentation en gaz (14) à l'extrémité inférieure pour recevoir un courant de traitement comprenant un gaz et des particules ;
un premier mécanisme (15) pour introduire un premier courant aqueux dans le courant de traitement, le premier mécanisme (15) comprenant un collecteur d'entrée (15) comprenant une ou plusieurs buses venturi à col multiple (17) et étant situé à côté de la rampe d'entrée d'alimentation en gaz (14) ;
un lit de milieu (16) situé au-dessus de la rampe d'entrée d'alimentation en gaz (14) ;
un second mécanisme comprenant des collecteurs de brouillard (24) pour introduire un second courant aqueux dans le courant de traitement, le second mécanisme (24) étant situé au-dessus du lit de milieu (16) et le second courant aqueux fournissant un écoulement à contre-courant à travers le lit de milieu (16), les collecteurs de brouillard (24) comprenant une pluralité de buses (25), le second courant aqueux formant une liqueur s'écoulant à travers le lit de milieu (16) ;
un système de circulation de liqueur comprenant un réservoir de liqueur (30) situé à l'extrémité inférieure du logement d'empilage (10) pour collecter la liqueur et une pompe pour faire circuler la liqueur à travers un échangeur de chaleur et vers les buses de pulvérisation (25) ;
une zone d'expansion (27) située au-dessus du second mécanisme (24) ;
un précipitateur électrostatique humide (18) situé au-dessus de la zone de détente (27) ;
des mécanismes de commande positionnés dans la section de conditionnement (12) pour commander la température et l'humidité du courant de traitement et pour commander les entrées et les sorties d'air afin de garantir que le courant de traitement passe au précipitateur électrostatique humide (18) sous la forme d'un courant de brouillard saturé, le brouillard de courant comprend un courant d'air super saturé ayant une humidité relative de 100 % ; et
une sortie à l'extrémité supérieure pour libérer le courant de processus.

6. Appareil selon la revendication 5, dans lequel le lit de milieu (16) comprend un matériau de garnissage.

7. Appareil selon la revendication 5, comprenant en outre un système de recyclage qui recycle le fluide des premier et second courants aqueux pour une utilisation ultérieure.

8. Appareil selon la revendication 5, comprenant en outre au moins une buse de pulvérisation et un collecteur de lavage (38), l'au moins une buse de pulvérisation étant reliée au collecteur de lavage (38) et le collecteur de lavage (38) étant situé au-dessus du dépoussiéreur électrostatique humide (18) et sous la sortie.

9. Appareil selon la revendication 5, dans lequel le précipitateur électrostatique humide (18) comprend une pluralité de tubes collecteurs (20), chaque tube collecteur comprenant une électrode de décharge ionisante (32) située dans une région centrale d'une électrode collectrice cylindrique mise à la terre électriquement (34).
